# EUROPEAN PATENT APPLICATION

(11) **EP 2 378 758 A1**
(43) Date of publication of application: **19.10.2011**
(21) Application number: 10382081.7
(22) Date of filing: 09.04.2010
(51) Int. Cl.: H04N 5/00, H04N 7/24

(54) **Method for broadcasting multimedia content**

(71) Applicant: Alcatel-Lucent España, S.A., 28045 Madrid (ES)
(72) Inventor: Ruiz Alonso, Jaime Jesús, 28045, Madrid (ES); Pérez García, Pablo, 28045, Madrid (ES); Villegas Nuñez, Alvaro, 28045, Madrid (ES)
(74) Representative: Elzaburu Marquez, Alberto

(57) **Abstract**

A procedure for broadcasting multimedia digital content to subscribers, in which a first transport stream of digital data is transmitted from a headend source (12) through a first telecommunications network different from a telecommunications network based on an IP internet protocol to subscribers and is received in a customer device (15); transmission from a first channel change unit (153) of a first channel change message to a second change unit (132) of a service application unit (13) connectable to the device (15) through a second telecommunications network (11) based on an IP internet protocol; in response to a channel change message received by the first change unit (153); transmission of a second digital data stream associated with the desired channel, which begins in a key frame stored in a second storage unit (133) of the server (13), in response to the reception of the first change message received in the second channel change unit.

## Description

### FIELD OF INVENTION

This invention refers in general to a procedure to broadcast multimedia contents to a subscriber and a service application medium that executes said procedure.

### BACKGROUND

It is known in the art that an operator of a diffusion or broadcast system of digital information services for radio and television can broadcast digital television and radio channels through a TV transport network of the satellite, cable, digital terrestrial type etc. to a group of end users of the digital services broadcasting system.

The audiovisual contents and information associated with television and radio services, are produced or collected from a headend source where they are compressed, multiplexed and adapted to the transport network which then transports them to the end users.

As a result, the subscriber is able to change from one selected channel to another desired channel of a group of TV and radio channels received from the multimedia headend source in a customer device such as a television decoder interface or set-top box.

From the moment a subscriber requests a change of channel selecting the channel of choice, various seconds may elapse, which differs from the same function in an analog TV broadcasting system, due to the fact that the customer's device which receives the broadcast channels may only begin to supply data packets to an audiovisual screen for viewing thereon, when it has received a key frame such as a frame I in the standard MPEG2 or an IDR frame in the standard H.264 within the data stream broadcast from the TV headend source.

When the customer's device receives a first valid key frame, it begins to decode, demultiplex and supply data packets to the audiovisual screen.

Through EP 1 895 777 B1 incorporated by reference, a fast channel change (FCC) procedure is known, for the specific case where a TV operator broadcasts audiovisual contents through an IP internet protocol network, the operator supplies IPTV internet protocol TV services.

However, the aforementioned disadvantage has still not been eliminated when audiovisual contents are broadcast through a transport network other than an IP network, and as a result the channel change may take various seconds and therefore, in this case, the subscriber's experience is inferior to that of the subscriber of an analog TV broadcasting system.

### DESCRIPTION (summary)

The present invention seeks to resolve or reduce one or more of the disadvantages expressed above by means of a broadcasting procedure of multimedia contents to a subscriber as defined in the claims.

In an embodiment of the procedure for broadcasting multimedia digital content to subscribers comprises the steps of transmission of a first digital data stream from a headend source to subscribers through a first telecommunications network different from an IP internet protocol based network; reception in a customer device of the first digital data stream associated with at least one channel which can be selected by the customer by means of a first channel change unit, parallel transmission from the first channel change unit of a first channel change message to a second channel change unit comprised in a service application unit which can be connected to the customer device through a second telecommunications network, based on an IP internet protocol; and a second channel change message to the decoding unit in order to execute a channel change, in reply to a channel change message received by the first channel change unit; transmission of a second digital data flow associated with the channel selected by the customer which comprises at least the last key frame corresponding to the desired channel and stored in a third storage unit comprised in the service application unit, in response to the reception of the second change channel change message received in the second channel change unit; playback in an audiovisual receiver of the desired content retrieved by the decoding unit from the second data stream received and supplied to a second storage unit connected to the receiver, while the first storage unit is unable to supply the desired content to the subscriber's receiver.

The headend source broadcasts the same first digital data stream to all the customer's devices through the first transport network selected. This stream does not need any change with respect to the original stream.

The decoding unit retrieves the multimedia content of the selected channel and supplies it through the first storage unit to the subscriber's audiovisual screen.

When the customer's device receives a channel change signal it starts to execute the required actions for supplying the content of the selected channel to the audiovisual screen. One of the actions performed by the customer's device is that of waiting to receive a key frame which may be decoded without any knowledge of a previous frame corresponding to the content of the desired channel.

Multimedia content is coded according to a coding standard for transport through a transport network in such a way that the multimedia contents are coded digitally forming a digital data flow generated according to the MPEG2 standard for example, including an intra-coded frame I distribution, two-way coded B frames and one-way coded P frames.

It should be noted that the decoding of a key frame does not require information from other frames. As a result, said key frame may be used as a support frame for decoding the rest of different types of frames.

In order to reduce the waiting time of a first valid key frame and, as a result, the reconstruction of a content corresponding to a channel selected by a subscriber in the customer's device, the customer's device connects to a service application unit such as a server through a second transport network of IP internet protocol type so that the customer's device through the first change unit requests the subscriber's desired channel content from the aforementioned server starting in a valid key frame.

Obviously, the server includes the third storage unit in order to receive and store intervals of all the audiovisual contents corresponding to the different channels broadcast by the headend source.

It should also be noted that the server should have sufficient storage capacity for storing various seconds or even minutes of each of the channels broadcast from the headend source.

Once the server has identified the last valid key frame stored by it and corresponding to the desired channel, it supplies that key frame and successive different frames to the customer device, so that once it has been received by the device it may begin to decode frames of any type in order to supply the corresponding desired audiovisual content to the audiovisual screen.

Therefore, for a period of time the customer's device is receiving two data streams, the first stream received directly from the headend source which is being stored but not supplied to a subscriber's receiver, and the second stream received from the server which is being directly decoded and supplied to the receiver.

After some time, the frames of the second stream received from the server, which is delayed over time with respect to the first stream received from the headend, will coincide with the first stream frames that the customer's device stores. At that moment the customer's device will ask the server to interrupt the second stream, and will begin to decode and supply to the customer's receiver the frames corresponding to the content of the desired channel received from the headend source.

Having interrupted the second stream, the storage unit of the customer device will continue to function in a circular and indefinite form so that the first stream will continue to be stored in the first storage unit, prior to being decoded and supplied to the subscriber's receiver.

### BRIEF DESCRIPTION OF THE FIGURES

A more detailed explanation of the devices and/or methods in accordance with embodiments of the invention is given in the following description, based on the figures attached in which:

figure 1 shows a diagram of a television broadcasting system,

figure 2 shows a block diagram of a means of embodiment.

### DESCRIPTION OF EMBODIMENTS

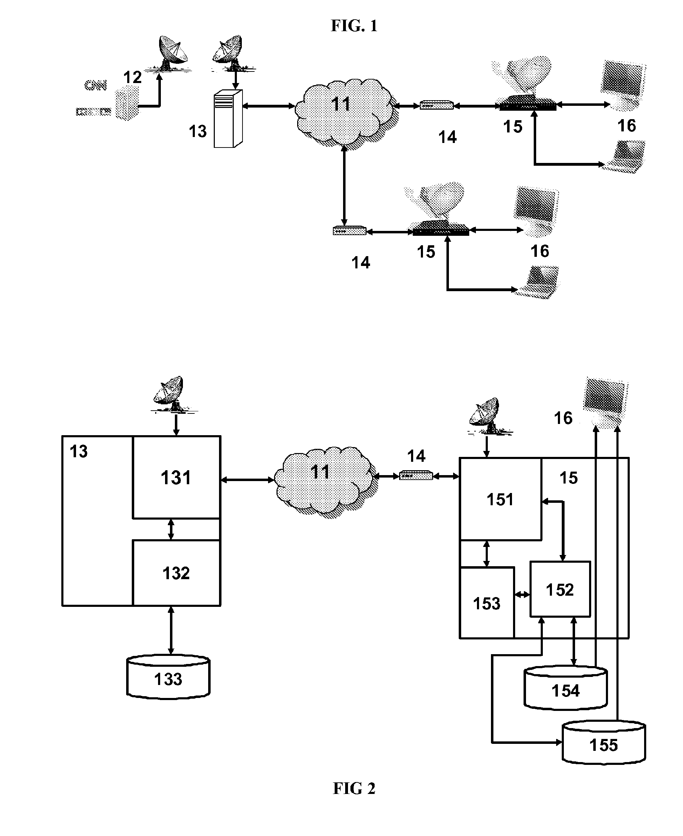

Figure 1 shows a digital services broadcast system of radio and television information in which a television and radio headend source 12 receives different types of multimedia audiovisual contents associated with communications channels of different multimedia contents such as CNN, RTL etc in order to compress and/or encode, multiplex and adapt the multimedia audiovisual content received in order for them to be transported with a first transport stream of digital data for a first telecommunications network other than an Internet IP protocol to users or final subscribers.

In relation to figure 2, the headend source 12 of a telecommunications operator 12 broadcasts the digital data stream through the first transport network in one- way mode to a plurality of subscribers.

The multimedia audiovisual contents are coded according to a coding standard, for example, of the MPEG2 video type or H.264 for its transport through the first telecommunications network selected, in such a way that the multimedia contents are coded digitally by the headend source 12 generating and broadcasting a stream of digital data according to the coding standard collected.

The subscriber receives the first data stream through a customer device 15 such as a decoder interface of the set-top box type, for example, which comprises a first 151 input/output unit which receives the first digital data stream transmitted and which it sends to a decoder unit 152 so that it will supply the subscriber's receiver 16, such as a multimedia audiovisual screen, with the multimedia audiovisual content of a selected channel.

The decoder interface 152 also comprises a first channel change unit in order to receive signals for changing one selected channel to the desired channel to be selected from among the plurality of channels transported by the first digital data stream transmitted from the headend source 12.

In response to the channel change signal received in the first channel changer 153, the decoder 152 carries out a channel change from the selected channel to the desired channel in order to show the content of the desired channel on the audiovisual screen 16, of the subscriber who has requested the change of channel.

The first data stream generated for broadcasting comprises a succession of data packets which comprise different types of frames distributed within the first digital data stream according to their degree of coding. There may be at least three different types of frames, for example, intracoded I frames, bidirectional coded B frames, and unidirectional coded P frames.

It should be noted that the level of compression of each type of frame is different, as the reconstruction of the multimedia audiovisual content received is made on the basis of a key frame or support, as its content may be reconstructed without knowledge of a previous frame, for example, frame I the compression of which is lower than the compression level of a B and/or P frame.

Therefore, screen 16 does not show the desired content until the decoding interface 15 has received a key frame on the basis of which the decoder 152 may begin to decode the first data stream received by the customer's device 15.

In order to reduce the period of time during which the audiovisual screen 16 is not showing any data relating to the desired channel, or has no signal or a black screen, the first change unit 153 is connectable through the first input/output unit 151 to the gateway device 14 through a second network 11 of transport telecommunications of IP internet protocol type to a second channel change unit 132 through a second input/output unit 131 included in a service application means or server 13.

The server 13 receives the first digital data stream broadcast from the headend source 12 through the second input/output unit 131.

The server 13 also includes a second storage unit 133 of circular buffer type in order to store for a specific period of time the content of each different channel broadcast from the headend source and connected electrically to the second control change unit 132 and the input/output unit 131.

When the first change unit 153 has received a request for channel change it transmits to the server 13 a first request message for transmission of the last key frame of the desired channel which is stored in the second storage unit 133 of the server 13 and, in addition, it sends a second request message for channel change to the decoder 152 of the customer's device 15 in order to execute the change of channel requested. Both first and second request messages are sent simultaneously and/or in parallel.

The second storage unit 133 receives the first digital data stream broadcast from the headend source 12 through the telecommunications network.

The second change unit 132 carries out key frame identification tasks corresponding to the different contents or programmes of the channels stored in the second 133 buffer and transported by the first data stream to the server 13.

When the first request message is received in the server 13, the second change unit 132 locates the last key frame stored in the second storage unit 133 of the server 13, corresponding to the programme of the desired channel and requested by the first change unit 153; in this way the server 13 generates and supplies through the second input/output unit 131 a second data stream comprising the last key frame and the successive different types of frames associated with the programme of the desired channel.

The second data stream generated is transported by the second IP network 11 to the requesting customer's device 15, which receives the aforementioned second stream through the first input/output unit 151 and resends it the decoder 152 while, in parallel the first data stream continues to be received as well by ten same decoder 152, in such a way that a first memory buffer 154 stores said first stream.

Consequently, at a specific moment in time the decoder 152 receives in parallel two data streams corresponding to the same programme of the desired channel however shifted in time, thus it only decodes that stream which has a key frame in order to supply the content of the desired channel to the customer's receiver 16.

It should be noted that the first and second data streams include different types of data, namely the first data stream is able to transport data packets relating to different types of channel which transmits the headend source 12, multi-programme transport section, and the second data stream transports exclusively previously stored data packets, in a server 13, corresponding to a channel content selected by the customer and requested from the first channel change unit 153 of the customer's device 15.

The server 13 transmits in unicast mode the second data stream at a higher bit rate which permits the communications channel established between the first input/output unit 151 of the customer's device 15 and the second input/output unit 131 of the server 13 through the second IP network 11.

It should be noted that the second data stream is transmitted exclusively to the subscriber 15 who has requested a channel change.

From the foregoing it may be deduced that between the desired channel content transported by the first stream and the content transported by the second stream there is an shift between the contents which may potentially be shown on screen 16, that is, the decoder 152 receives a key frame corresponding to the second data stream before a key frame corresponding to the first stream, thus the decoder 152 begins to decompress and supply the content of the desired channel to the screen 16 based on the key frame corresponding to the second stream received which corresponds to a moment previous to the content which is being broadcast live from the headend source 12.

Nevertheless, the time that the screen 16 remains without showing any data associated with a content of a desired channel is reduced, and therefore, the experience of the subscriber may be approximated to the experience obtained with an analog broadcasting system for transmitting multimedia audiovisual content when requesting a change of channel.

The foregoing is supported by the fact that the content shown on the audiovisual screen 16 has been recovered from the second data stream which transports data packets corresponding to a content which is stored in the second storage unit 133 of the server 13 of, for example, an added value service provider.

As mentioned previously, the decoder 152 receives the first and second data streams in parallel when a subscriber has requested a channel change, in such a way that there is a time difference between both stored contents, that is the content stored in the first buffer 154 corresponds to the live broadcasting and the content stored in the second buffer 133 corresponds to a content of the same desired channels however, broadcast a few moments beforehand.

When the customer device 15 detects that the data package, that is, frames of any type which are received by the second stream are stored in the first buffer 154, the first change unit 153 sends a third request message to cease transmission of the second stream to the second change unit 132 of the server 13 in order to interrupt transmission of the second data stream.

Subsequently, a third buffer 155 of the customer's device 15 empties and the decoder 152 continues to supply the content of the desired channel to the screen 16 decoding the data packets stored in the first buffer 154.

This situation is maintained over time until the subscriber requests a new channel change, so that the foregoing procedure is executed every time that the end customer requests channel changes.

The procedure for broadcasting a multimedia audiovisual content relating to a channel change requested from a first channel change unit 153 to the second channel change unit 132 broadcast on a second IP network 11, may be carried out with a computer, which can be charged in an internal memory of a computer with input and output units, and also with processor units.

For this purpose the computer programme comprises codes configured to execute the steps of the aforementioned process when it is executed by the computer. In addition, the executable codes may be recorded in a legible carrier medium in a computer.

## Claims

1. **A procedure for broadcasting of multimedia digital content** to subscribers, the method comprises the following steps
reception in a customer device (15) of a first transport stream of digital data broadcast from a headend source (12) through a first telecommunications network differing from a telecommunications network based on an IP internet protocol to subscribers;
playing in the subscriber's audiovisual receiver of the desired content recovered by a decoding unit (152) and supplied to a first storage unit (154)connected to the receiver(16);
**characterized in that** the method additionally comprises the following steps
broadcasting from a first channel change unit (153) of a first channel change message to a second channel change unit (132) comprised in a service application unit (13) connectable to a customer device (15) through a second telecommunications network (11) based on an IP internet protocol, in response to a channel change message received by the first channel change unit (153);
broadcasting of a second digital data stream associated with the channel selected by the customer, which begins in a key frame, corresponding to the audiovisual content of the desired channel, stored in a second storage unit (133) comprised in a service application unit (13) as response to the reception of a first channel change message.

2. **Procedure** in accordance with claim 1 **characterized in that** it also comprises the step of playback in the audiovisual receiver (16) of the desired channel content decoded by a decoding unit (152) from the second data stream received.

3. **Procedure** in accordance with claim 1; **characterized in that** it comprises in addition the step of storage in the second storage unit (133) of the server (13) of the first digital data stream broadcast from the headend source (12) through the first telecommunications network.

4. **Procedure** in accordance with claim 2; **characterized in that** it also comprises a step of stopping of the decoding of the second data stream by the decoding unit (152) when the first change unit (153) identifies that the data packets of the second stream coincide with data packets of the first data stream stored in the first buffer (154).

5. **A customer device** receives a first digital data stream transmitted from a headend source (12) through a first telecommunications network different from a telecommunications network based on an IP internet protocol, **characterized in that** it comprises a first channel change unit (153) which is adapted to transmit a first channel change message to a second channel change unit (132) comprised in a server application unit (13) connectable to the customer device (15) through a second telecommunications network (11) based on an IP internet protocol in response to a channel change message received by the first channel change unit (153).

6. **A device** in accordance with claim 4; **characterized in that** a decoder (152) which is adapted to receive a second digital data stream associated with a desired channel content, including at least the final key frame stored in a second storage unit (133) comprised in a service application unit (13), in response to the reception of the first channel change message in the second channel change unit (132).

7. **A device** in accordance with claim 5; **characterized in that** the decoder (152) is adapted to decode the second data stream received and supply the decoded content of the desired channel to the subscriber's audiovisual receiver (16).

8. **Device** in accordance with claim 6; **characterized in that** it is adapted to stop the decoding of the second data stream by the decoding unit (152) when the first change unit (153) identifies that the data packets of the second stream coincide with data packets of the first data stream stored in the first buffer (154).

9. **Device** in accordance with claim 6; **characterized in that** the decoder (152) is adapted to decode data packets of the first data stream stored in a first buffer (154) after the first channel change unit (153) has identified that the data packets of the second stream coincide with data packets of the first data stream stored in the first buffer (154).

10. **A service application unit** receives a first digital data stream transmitted from a headend source (12) through a first telecommunications network different from a telecommunications network based on an internet protocol or IP; **characterized in that** it comprises a second channel change unit (132) which is adapted to receive a second telecommunications network (11) based on an IP internet protocol from a first channel change unit (153) comprised in a customer device (15) in response to a channel change message received by the first channel change unit (153).

11. **Application unit** in accordance with claim 9; **characterized in that** the application unit (13) is adapted to transmit a second digital data stream associated with the customer's desired channel content, including at least the final key frame stored in a second storage unit (133) comprised in a service application unit (13), as response to the reception of the first channel change message.

12. **Application unit** in accordance with claim 10; **characterized in that** the second storage unit (133) is adapted to store the first digital data stream broadcast from the headend source (12) through the first telecommunications network.

13. **Application unit** in accordance with claim 10; **characterized in that** the service application unit (13) is adapted to stop transmitting the second data stream when the first change unit (153) identifies that the data packets of the second stream coincide with data packets of the first data stream stored in the first buffer (154).

14. **A computer programme** may be loaded in an internal computer memory with input and output units and a processing unit, where the computer programme comprises executable codes configured to carry out the steps of the transmission procedure for multimedia digital content in response to a second channel change request message received in a second channel change unit, supplying a second digital data stream associated with the customer's selected channel, which comprises at least the last key frame corresponding to the desired channel and stored in a third storage unit comprised in a service application unit, in accordance with any of claims 1 to 4.
